# EUROPEAN PATENT SPECIFICATION

(11) **EP 1 498 616 B1**
(45) Date of publication and mention of the grant of the patent: **31.05.2006**
(21) Application number: 04103293.9
(22) Date of filing: 12.07.2004
(51) Int. Cl.: F16B 5/02, F16B 37/12, F16B 39/12

(54) **Securing spaced elements to one another**
Über einen Zwischenraum aneinander Befestigen von Elementen
Fixation l'un à l'autre d'éléments espacés

(30) Priority: 16.07.2003 GB 3165875
(43) Date of publication of application: 19.01.2005
(73) Proprietor: CNH U.K. LIMITED, Basildon, Essex S14 3AD (GB)
(72) Inventor: Davies, Martin, South Woodham Ferrers, Essex CM3 5YH, (GB); Skelcher, Michael D., Latchindon, Essex CM3 6JP, (GB)
(74) Representative: CNH IP Department

(56) References cited:
- EP-A- 0 492 287
- EP-A- 0 999 369
- US-A- 2 886 086
- US-A1- 2002 154 966

## Description

The present invention relates to a method and apparatus for securing to one another two elements while maintaining a gap between them and is concerned with an improvement of the Applicants' copending European Patent Application 99203648.3 (Pub. No. EP-A-0999369).

As described in EP-A-0999369, it is common to use so-called structural engines in agricultural vehicles, such as tractors, where the engine block forms part of the unsprung mass (or chassis) of the vehicle and is relied upon to assure the structural rigidity of the tractor. To increase the rigidity of such an engine, it is known to secure a substantial oil pan to the underside of the engine block. The oil pan is not only secured to the engine block to collect the lubricating oil circulating through the engine but also acts as a structural element onto which other elements of the tractor chassis such as the front support or the transmission are bolted.

In this situation, because of tolerance stack-up in the manufacture of the engine block, the oil pan and the front support, it is not possible to ensure that the rear face of the front support will always simultaneously lie flush with both the front face of the engine block and the front face of the oil pan. These three elements are therefore intentionally dimensioned such that a gap will always be present between the front support and the oil pan, though the size of the gap may vary from one engine to another.

Conventionally, this gap is taken up by the use of shims, i.e. thin metal spacers that are sandwiched in the gap between the front support and the oil pan before these two are bolted to one another. It is important to select shims of the correct thickness to take up the gap but it is found in practice that incorrect shims are sometimes selected and this results in damage because of the increased stress placed on the elements.

It is also time consuming to select and mount the shims, which adds to the manufacturing costs.

EP-A-0999369 teaches a method of bolting elements to one another while maintaining a spacing between them, which dispenses with the use of shims and allows a simple bolting of the elements to one another. In the latter patent application, there is disclosed a method which comprises forming a through bore in a first element, placing an annular bush within the bore of the first element to project from the first element into contact with the surface of the second element, locking the bush in relation to the bore in the first element and securing the structural elements to one another by means of a bolt passing through the annular bush.

Various possibilities are described in EP-A-0999369 for locking the bush within the bore in the first element, amongst them the use of an anaerobic adhesive, making the bush a shrink-fit in the bore and locking the bush mechanically in place by the use of a pinch bolt or by the use of one or more sliding wedges that expand the diameter of the bush during assembly.

A still further possibility envisaged in EP-A-0999369 is to provide the bush with an external screw thread and to screw it into the bore. In this case, the bush must still be locked relative to the bore and mention is made of using a lock nut or an anaerobic adhesive.

The present invention seeks to provide an improvement over the teaching of EP-A-0999369, which dispenses with the need for an adhesive or a lock nut to lock the externally threaded bush in position.

In accordance with a first aspect of the present invention, there is provided a method of securing two elements to one another while maintaining a gap between the elements, which comprises forming a threaded through bore in a first element, screwing an externally threaded annular bush within the bore of the first element to project from the first element into contact with the surface of the second element, and securing the structural elements to one another by means of a bolt passing through the annular bush, characterised by the steps of providing a tapering end on the bush and a complementary tapering recess in the second element to receive the end of the bush, and tightening the bush within the threaded bore with sufficient torque to lock the bush in the bore.

According to a second aspect of the invention, there is provided an assembly comprising two structural elements secured firmly to one another while a gap is maintained between two opposed faces of the elements, the assembly comprising a threaded through bore in the first of the two elements, an externally threaded annular bush screwed into the through bore and having one end projecting from one of said opposed faces into contact with the other of the opposed faces so as to maintain the desired gap between the opposed faces, and a bolt passing through the annular bush to secure the elements to one another, characterised in that the end of the bush is tapered and is locked within a recess of complementary shape in the second element.

In the present invention, as the tapered bush is driven into the tapered recess, some degree of elastic deformation is experienced by at least one of the bush and the second structural element so that the bush is gripped by a clamping force and effectively locked against rotation.

The angle of the wedge is important in that if the wedge is too pointed it can damage the structural element. On the other hand if the conical angle is too great then the desired locking action is not achieved. In practice it has been found that an angle of approximately 30° achieves firm locking, to prevent the bush from being loosened unintentionally during normal operation, without risking damage to the components.

It is preferred for the bolt acting to secure the two elements to one another to be threaded into the second element and for its head to act on the first element directly rather than against the bush. To this end, it is desirable for the head of the bush not to protrude from the through bore so that the head of the bolt may act on the first element either directly or through a washer fitted over the mouth of the through bore.

The head of the bush is advantageously shaped to receive a spanner or a key that has a smaller outer diameter than the diameter of the through bore so that it can fit in the through bore and enable the bush to be tightened to the necessary torque even when its head is disposed within the through bore.

By tightening the head of the bolt against the first element rather than against the bush, a frictional force is maintained between the external thread of the bush and the internal thread of the through bore further augmenting the forces resisting undesired loosening of the bush during normal operation.

The invention will now be described further, by way of example, with reference to the accompanying drawings, in which:
Figure 1 is a schematic section through a first embodiment of the invention, and
Figure 2 is a similar view of an alternative and preferred embodiment of the invention.

The drawings show schematically the engine 10 and the oil pan or crankcase 12 of a structural engine of an agricultural tractor connected to a front support 14. The oil pan 12 is a large unit which is bolted to the engine 10 to increase its structural rigidity and both engine 10 and the oil pan 12 need to be bolted securely to the front support 14. The engine 10 mates flush with the front support and is bolted to it using bolts 16. However, because of tolerance stack-up, it is not possible to guarantee that the front face of the oil pan 12 will mate flush with both the front support 14 at one end and the gearbox bell housing at the other end. For this reason the oil pan 12 is intentionally dimensioned such that there will always be a gap G between it and the front support 14.

Conventionally, the gap G is taken up by shims but instead, in the present invention, a through bore 18 is formed in the front support 14 into which there is threaded a bush 20 having a conically tapering end 22. The oil pan 12 on the other hand has a conical recess 24 which receives the end 22 of the bush 20 and leads to a threaded bore 26. A bolt 28 which passes through the centre of the bush 20 is threaded into the bore 26 in the oil pan to secure the oil pan 12 and the front support 14 to one another.

The engine 10 and oil pan 12 are assembled to the front support 14 by first inserting the bolts 16 into the engine 10 and tightening them to the point where the gap G is reduced to its minimum width. Next the bush 20 is inserted into the bore 18. The head 30 is hexagonal so that it may be gripped by a spanner and tightened to a predetermined torque. Next the bolt 28 is inserted through the bush and engaged in the threaded bore 26 in the oil pan. Last, the bolts 16 and 28 are tightened to predetermined torques to complete the assembly.

Because the end 22 of the bush 20 and the recess 24 in the oil pan 12 are tapered, tightening of the bush 20 causes elastic deformation of the wedge and/or the surrounding metal of the oil pan. The deformed metal applies a radial clamping force tending to lock the bush in the bore 18 during normal use, without the need for a lock nut nor an anaerobic adhesive, as proposed in EP-A-0999369.

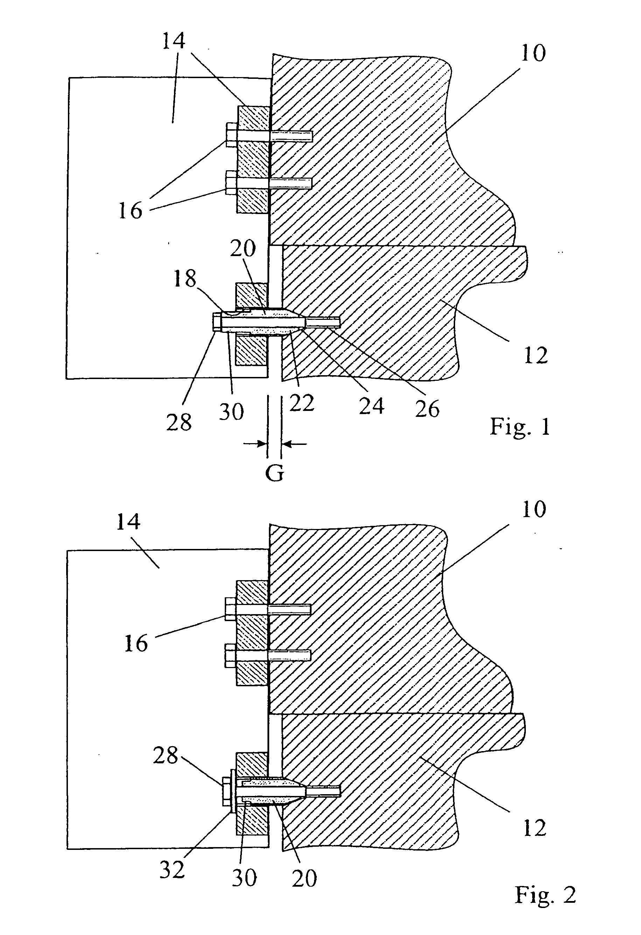

The embodiment of Figure 2 differs from that of Figure 1 in that the head 30 of the bush 20 does not protrude from the bore 18 and in that the head of the bolt 28 does not act on the head of the bush 20 but on the front support 14 through a suitable washer 32 fitted over the mouth of the bore 18. To allow the bush 20 to be recessed into the bore 18, it is important that any formation provided to enable it to be gripped by a key or a spanner should not be larger than the diameter of the bore 18. The bush 20 may for example be formed in the same manner as a grub screw with a non-circular cavity to receive a hexagonal key or a Torx screwdriver.

In the embodiment of Figure 1, the tightening of the bush 20 will not only apply a force between the conical surfaces but also on the side of the threads of the bush facing away from the oil pan 12. However, when the bolt 28 is tightened against the head of the bush 20, it reduces the force acting on that side of the threads. By contrast, in the embodiment of Figure 2, the tightening of the bolt 28 increases the force on the side of the threads facing away from the oil pan 12 and therefore increases still further the frictional forces withstanding undesired loosening of the bush 20.

It will be clear that various modifications may be made to the preferred embodiment without departing from the scope of the invention as set out in the appended claims. For example, in the embodiment of Figure 2, the head of the bush may protrude from the threaded through bore as long as the head of the bolt 28 or the intervening washer 32 is shaped to fit over it.

## Claims

1. A method of securing two elements (12, 14) to one another while maintaining a gap (G) between the elements, which comprises forming a threaded through bore (18) in a first element (14), screwing an externally threaded annular bush (20) within the bore (18) of the first element (14) to project from the first element (14) into contact with the surface of the second element (12), and securing the structural elements (12, 14) to one another by means of a bolt (28) passing through the annular bush (20), and
**characterised by** the steps of providing a tapering end (22) on the bush (20) and a complementary tapering recess (24) in the second element (12) to receive the end of the bush (20), and tightening the bush (20) within the threaded bore (18) with sufficient torque for the frictional force between the end (22) of the bush (20) and the complementary recess (24) in the second element (12) to prevent undesired loosening of the bush (20) in the bore (18).

2. An assembly comprising two structural elements (12, 14) secured firmly to one another while a gap (G) is maintained between two opposed faces of the elements (12, 14), the assembly comprising a threaded through bore (18) in the first (14) of the two elements, an externally threaded annular bush (20) screwed into the through bore (18) and having one end projecting from one of said opposed faces into contact with the other of the opposed faces so as to maintain the desired gap (G) between the opposed faces, and a bolt (28) passing through the annular bush (20) to secure the elements to one another, and
**characterised in that** the end of the bush (20) is tapered and is locked within a recess (24) of complementary shape in the second element (12).

3. An assembly as claimed in claim 2, wherein the bolt (28) acting to secure the two elements (12, 14) to one another is threaded into the second element (12) and wherein the head of the bolt (28) acts on the first element (14) directly or through a washer (32).

4. An assembly as claimed in claim 3, wherein the head (30) of the bush (20) does not protrude from the through bore (18).

5. An assembly as claimed in claim 4, wherein the head (30) of the bush (20) is shaped to receive a spanner or a key of smaller outer diameter than the through bore (18).

## Patentansprüche

1. Verfahren zur Befestigung von zwei Elementen (12, 14) aneinander unter Aufrechterhaltung eines Zwischenraums (G) zwischen den Elementen, das die Bildung einer Gewinde-Durchgangsbohrung (18) in einem ersten Element (14), das Einschrauben einer mit Außengewinde versehenen ringförmigen Hülse (20) in die Bohrung (18) des ersten Elementes (14) derart, dass diese aus dem ersten Element (14) in Kontakt mit der Oberfläche des zweiten Elementes (12) vorspringt, und die Befestigung der Bauelemente (12, 14) aneinander mit Hilfe einer Schraube (28) umfasst, die durch die ringförmige Hülse (20) hindurchläuft, und
**gekennzeichnet durch** die Schritte der Schaffung eines sich verjüngenden Endes (22) auf der Hülse (20) und einer komplementären sich verjüngenden Ausnehmung (24) in dem zweiten Element (12) zur Aufnahme des Endes der Hülse (20), und des Festziehens der Hülse (20) in der Gewindebohrung (18) mit einer ausreichenden Kraft, damit die Reibungskraft zwischen dem Ende (22) der Hülse (20) und der komplementären Ausnehmung (24) in dem zweiten Element (12) ein ungewolltes Lockern der Hülse (20) in der Bohrung (18) verhindert.

2. Baugruppe, die zwei Bauelemente (12, 14) umfasst, die fest aneinander befestigt sind, wobei ein Zwischenraum (G) zwischen zwei gegenüberliegenden Flächen der Elemente (12, 14) aufrechterhalten wird, wobei die Baugruppe eine Gewinde-Durchgangsbohrung (18) in dem ersten (14) der zwei Elemente, eine mit Außengewinde versehene ringförmige Hülse (20), die in die Durchgangsbohrung (18) eingeschraubt ist und ein aus einer der gegenüberliegenden Flächen in Kontakt mit der anderen der gegenüberliegenden Flächen vorspringendes Ende aufweist, um den gewünschten Zwischenraum zwischen den gegenüberliegenden Flächen aufrechtzuerhalten, und eine Schraube (28) umfasst, die durch die ringförmige Hülse (20) hindurchläuft, um die Elemente aneinander zu befestigen, und
**dadurch gekennzeichnet, dass** das Ende der Hülse (20) verjüngt ist, und in einer Ausnehmung (24) mit komplementärer Form in dem zweiten Element (12) festgelegt ist.

3. Baugruppe nach Anspruch 2, bei der die Schraube (28), die zur Befestigung der zwei Elemente (12, 14) aneinander wirkt, in das zweite Element (12) eingeschraubt ist, wobei der Kopf der Schraube (28) auf das erste Element (14) direkt oder über eine Beilagscheibe (32) wirkt.

4. Baugruppe nach Anspruch 3, bei der Kopf (30) der Hülse (20) nicht aus der Durchgangsbohrung (18) vorspringt.

5. Baugruppe nach Anspruch 4, bei der der Kopf (30) der Hülse (20) so geformt ist, dass er einen Schlüssel oder einen Schraubendreher mit kleinerem Außendurchmesser aufnimmt, als die Durchgangsbohrung (18).

## Revendications

1. Méthode de fixation de deux éléments (12, 14) l'un à l'autre tout en maintenant un intervalle (G) entre les éléments, qui comprend la formation d'un alésage (18) traversant fileté dans un premier élément (14), le vissage d'une douille annulaire (20) à filet extérieur dans l'alésage (18) du premier élément (14) de manière à ressortir du premier élément et à contacter la surface du deuxième élément (12), et la fixation des éléments structurels (12, 14) l'un à l'autre au moyen d'un boulon (28) traversant la douille annulaire (20), et **caractérisée par** les étapes qui consistent à prévoir une extrémité conique (22) sur la douille (20) et un évidement (24) conique complémentaire dans le deuxième élément (12) de manière à recevoir l'extrémité de la douille (20), et à serrer la douille (20) dans l'alésage fileté (18) selon un couple suffisant pour l'effort de friction entre l'extrémité (22) de la douille (20) et l'évidement (24) complémentaire dans le deuxième élément (12) à prévenir un desserrage indésirable de la douille (20) dans l'alésage (18).

2. Ensemble comprenant deux éléments structurels (12, 14) fixés solidement l'un à l'autre, tandis qu'un intervalle (G) est maintenu entre deux faces opposées des éléments (12,14), l'ensemble comprenant un alésage traversant (18) fileté dans le premier (14) des deux éléments, une douille annulaire (20) filetée extérieurement vissée dans l'alésage traversant (18) et dont une extrémité dépasse de l'une des desdites faces opposées pour être en contact avec l'autre des faces opposées de manière à maintenir l'intervalle (G) souhaité entre les faces opposées, et un boulon (28) traversant la douille annulaire (20) pour fixer les éléments l'un à l'autre,
**caractérisé en ce que** l'extrémité de la douille (20) est conique et bloquée dans un évidement (24) de forme complémentaire dans le deuxième élément (12).

3. Montage selon la revendication 2 dans lequel le boulon (28) agissant pour fixer les deux éléments (12, 14) l'un à l'autre est fileté dans le deuxième élément (12) et dans lequel la tête du boulon (28) agit sur le premier élément (14) directement ou par le biais d'une rondelle (32).

4. Montage selon la revendication 3 dans lequel la tête (30) de la douille (20) ne dépasse pas de l'alésage traversant (18).

5. Montage selon la revendication 4 dans lequel est formé de manière à recevoir une clé à vis ou une clé normale d'un diamètre extérieur inférieur à celui de l'alésage traversant (18).
